# EUROPÄISCHE PATENTSCHRIFT

(11) **EP 2 760 701 B1**
(45) Veröffentlichungstag und Bekanntmachung des Hinweises auf die Patenterteilung: **30.11.2016**
(21) Anmeldenummer: 12727799.4
(22) Anmeldetag: 11.06.2012
(51) Int. Cl.: B60N 2/44, B60N 2/64, B60N 2/68

(54) **FAHRZEUGSITZ MIT AUS AUTOREAKTIVEN GERÜSTSTRUKTUREN AUSGEBILDETEN SEITENWANGEN**
VEHICLE SEAT WITH SIDEPIECES MADE OF AUTOREACTIVE FRAMEWORK STRUCTURES
SIÈGE DE VÉHICULE COMPORTANT DES JOUES LATÉRALES RÉALISÉES À PARTIR DE STRUCTURES DE CHÂSSIS RÉAGISSANT AUTOMATIQUEMENT

(30) Priorität: 30.09.2011 DE 102011114622
(43) Veröffentlichungstag der Anmeldung: 06.08.2014
(73) Patentinhaber: Sitech Sitztechnik GmbH, 38442 Wolfsburg (DE)
(72) Erfinder: BUCHENBERGER, Martin, 38176 Wendeburg (DE); BAUMGARTEN, Jens, 38102 Braunschweig (DE)
(74) Vertreter: Wöhltjen, Karsten
(86) Internationale Anmeldenummer: PCT/EP2012/002471
(87) Internationale Veröffentlichungsnummer: WO 2013/045001

(56) Entgegenhaltungen:
- EP-A1- 1 577 158
- DE-A1-102007 054 257
- DE-B3-102005 054 125

## Beschreibung

Die Erfindung betrifft einen Fahrzeugsitz, der eine Grundstruktur mit verstellbaren Seitenwangen aufweist.

Die DE 10 2007 054 257 A1 beschreibt einen Fahrzeugsitz mit gebogenen elastischen Abschnitten aus einem Blechstreifen, der sich in Sitzquerrichtung erstreckt und den Rücken oder die Beine eines Passagiers muldenförmig umschließt. An den seitlichen Endbereichen des elastischen Abschnittes ist jeweils ein Ende eines länglichen Schubelements angebunden. Die freien Enden des Schubelementes können durch ein Stellelement voneinander weg oder aufeinander zu bewegt werden, sodass die Biegung des elastischen Abschnittes verändert wird. Dadurch werden die am elastischen Abschnitt angebunden Enden der Schubelemente (2) beispielsweise nach vorne gedrückt und die Wölbung des elastischen Abschnitts (1) nimmt zu, der Seitenhalt für den Passagier vergrößert sich dadurch. Hier findet folglich eine Verformung der Gerüststruktur durch eine extern aufgebrachte Kraft durch das Stellelement, unabhängig von einem durch den Insassen eingebrachten Impuls statt. Zur Verstellung der Schubelemente werden mehrere Varianten vorgeschlagen, sie werden bevorzugt pneumatisch, hydraulisch oder elektrisch verstellt. Zwischen den elastischen Abschnitt und den Schubelementen können Stege eingebracht sein, die zur Verstärkung der Struktur und zur Verbesserung der Stabilität beitragen.

Aus dem Stand der Technik sind "funktionsintegrierte, bionische Fahrzeugsitze" bekannt. Die Besonderheit dieser Fahrzeugsitze steckt in der Ausgestaltung der Rückenlehne, die sich das Flossenstrahl-Prinzip, das so genannte "Finray-Prinzip", zu Nutze macht. Die Anwendung dieses Prinzips und der grundsätzliche Aufbau, der so genannte Finray-Aufbau, wurde bereits in der EP 1 040 999 A2 für die Konstruktion von Bauteilen, wie Sitzlehnen und Sitzflächen, beschrieben.

Das Finray-Prinzip kann bei Fischen beobachtet werden. Es beruht auf der besonderen Struktur der Fischflossen von Fischen. Das Prinzip bewirkt, dass sich die Fischflosse bei Druckeinwirkung auf einen Punkt entgegen dieser Druckrichtung bewegt. Die Fischflosse reagiert auf den Druck mit Gegendruck. Möglich wird das durch den speziellen Aufbau der Fischflosse mit zwei flexiblen Streben, die an einer Spitze zusammenlaufen und dort fest miteinander verwachsen sind. Zwischen den zwei elastischen Flanken befinden sich Querstreben, die die Flanken auf Abstand halten und elastische Bewegungen zulassen. Hält man die Schwanzflosse an der Basis, die der Spitze gegenüber liegt, fest und drückt mit einem Finger auf die Mitte des Flossenblattes, bewegt sich die Flossenspitze wider Erwarten entgegen der Druckrichtung des Fingers.

Technisch wurde dieses Wirkprinzip in einer Rückenlehnenstruktur eines Fahrzeugsitzes bereits auf folgende Weise realisiert: Zwei flexible Flanken aus thermoplastischem GlasfaserVerbundwerkstoff (einem so genannten Organoblech) bilden die Vorder- und Rückseite der Rückenlehne. Diese sind unten an der Rückenlehnenbasis befestigt, laufen nach oben hin spitz zusammen, wo ihre Enden miteinander verbunden sind. An den Flanken gelenkig angebundene Streben verbinden Vorder- und Rückseite miteinander und halten diese auf Abstand. Eine solche Rückenlehne stützt auch im Lendenwirbelbereich, gibt im Schulterbereich am meisten nach hinten nach und reduziert dabei gleichzeitig den Abstand eines Kopfpolsters einer Kopfstütze zum Kopf eines Aufsitzenden. Bei großen Auslenkungen, wie sie zum Beispiel auch bei einem Heckaufprall auftreten können, kann so einem Schleudertrauma mit Hilfe einer solchen Rückenlehnenstruktur wirkungsvoll entgegen gewirkt werden. Somit ist mit einer solchen Rückenlehnenstruktur einer Rückenlehne ein Anti-Whiplash-Effekt im Bereich des Kopfes erzielbar.

Ein Fahrzeugsitz, der sich das Finray-Prinzip zu Nutze macht, wird in der Druckschrift
DE 10 2005 054 125 B3 beschrieben. Der Rückenlehnenrahmen des Fahrzeugsitzes umfasst rahmenartig eine auf dem Finray-Prinzip aufgebaute Konstruktion aus starrer Rückwand, flexibel ausgebildeter, plattenartiger Vorderwand und dazwischen angeordneten Querstreben. Die Querstreben erstrecken sich in ihrer Längsrichtung entlang der Fahrzeugsitzbreitenrichtung. Die Vorderwand und die Rückwand hingegen weisen eine Längsausdehnung in Fahrzeug-Höhenrichtung auf. Die Streben erstrecken sich in ihrer Längsrichtung entlang der Fahrzeugsitzbreitenrichtung. Jede Strebe ist gegenüber der Innenwand der Rückwand und der Innenwand der Vorderwand mittels eines Scharniers befestigt. Soll die Kontur des Fahrzeugsitzes verändert werden, wird die Rückwand mittels eines Betätigungselementes, wie einem Hebel, mechanisch oder elektrotechnisch verschoben. Die starren Streben lassen sich nur in Längsrichtung verschieben und verändern je nach Einstellung der Rückenlehne den Abstand zwischen Vorderwand und Rückwand des Sitzes und somit die Sitzkontur. Die Druckschrift stellt eine Rückenlehne eines Fahrzeugsitzes zur Verfügung, die unter Ausnutzung des Finray-Prinzips sowohl im Lendenwirbel- als auch im Schulterbereich in gegenseitiger Abhängigkeit voneinander auf einfache Weise verformt werden kann.

Aus der Druckschrift DE 10 2009 033 883 A1 ist ein Fahrzeugsitz mit einer Rückenlehne bekannt, die zumindest in einem seitlich mittleren Bereich eine stützende Strebenstruktur für zumindest ein den Sitzbenutzer stützendes Polsterteil aufweist. Die Strebenstruktur ist unten an einem Stützteil befestigt, das am Sitzteil des Fahrzeugsitzes abgestützt ist. Die Strebenstruktur weist zwischen einer vorderen und hinteren Stützwand jeweils mit einem Höhenabstand voneinander angeordnete Stützstreben auf. Die Strebenstruktur bildet einen zumindest unten oder seitlich offenen Freiraum. An dem Stützteil ist ein nach oben oder seitlich abstehendes Stützelement befestigt, das nicht oder allenfalls wenig verformbar ist und von unten oder seitlich in den Freiraum der Strebenstruktur ragt. Bei einer größeren Belastung der Rückenlehne nach hinten oder nach vorne kommt das Stützelement entweder sofort oder nach einer vorgegebenen elastischen Verformung der Strebenstruktur im unteren Bereich an der zugewandten vorderen beziehungsweise hinteren Stützwand und/oder zumindest einer Stützstrebe zur Anlage und stützt die betreffende in Anlage befindliche vordere Stützwand und/oder Stützstrebe. Die Druckschrift DE 10 2009 033 883 A1 verweist in ihrer Einleitung auf die DE 10 2005 054 125 B3, die einen Rückenlehnenrahmen beschreibt, der unter Berücksichtigung des Finray-Prinzips rahmenartig aufgebaut ist. Die Strebenstruktur der Rückenlehne die in der Druckschrift DE 10 2009 033 883 A1 beschrieben ist, macht sich ebenfalls das Finray-Prinzip zu Nutze, wobei seitlich der Strebenstruktur einen Sitzbenutzer stützende Seiten-Polsterteile angeordnet sind, die jedoch gegenüber der Strebenstruktur nicht weiter verstellbar sind.

Ausgehend von den bekannten Anwendungsfällen liegt der Erfindung die Aufgabe zu Grunde, das Finray-Prinzip auch für andere Bauteile anzuwenden.

Ausgangspunkt für die vorliegende Erfindung ist ein Fahrzeugsitz mit einer rückenlehnenseitigen und/oder einer sitzteilseitigen Grundstruktur, die mindestens eine bewegliche Seitenwangenstruktur umfasst.

Der Erfindungsgedanke besteht darin, das in der Einleitung beschriebene Finray-Prinzip für die Verstellung von Seitenwangen eines Sitzteiles und/oder einer Rückenlehne eines Fahrzeugsitzes anzuwenden.

Erfindungsgemäß ist vorgesehen, eine Seitenwange eines Sitzteiles und/oder einer Rückenlehne eines Fahrzeugsitzes als Finray-Aufbau beziehungsweise Finray-Struktur auszugestalten oder anders gesagt, zumindest die Seitenwange als eine intelligente reaktive Struktur auszubilden, die unter Ausnutzung bionischer Ansätze funktioniert beziehungsweise reagiert, wie nachfolgend näher erläutert wird.

Erfindungsgemäß wird für die Seitenwangenstruktur eine autoreaktive Struktur in der Art des Finray-Aufbaus vorgeschlagen, wobei die autoreaktive Seitenwangenstruktur eine Funktion aufweist, die nach dem erläuterten Finray-Prinzip arbeitet.

Im Detail ist erfindungsgemäß vorgesehen, dass zumindest die Seitenwangenstruktur der Grundstruktur aus mindestens einer Gerüststruktur ausgebildet ist. Diese mindestens eine Seitenwangengerüststruktur weist biegeelastische Flanken und zwischen den Flanken liegende auslenkbare Querstreben auf, die über elastische Verbindungsmittel an den Flanken angeordnet sind, wodurch ein aus einer Richtung über eine biegeelastische Flanke auf die Querstreben der mindestens einen Seitenwangengerüststruktur wirkender Kraftimpuls, eine ausgleichende autoreaktive Verformung der mindestens einen Seitenwangengerüststruktur an einer anderen Stelle in entgegen gesetzter Richtung bewirkt.

In bevorzugter Ausgestaltung der Erfindung ist vorgesehen, dass die Grundstruktur ferner eine Verbindungsstruktur aufweist, an der eine oder mehrere Seitenwangengerüststrukturen angeordnet sind.

In einer ersten bevorzugten Ausführungsform der Erfindung, ist die Verbindungsstruktur eine Verbindungsgerüststruktur mit biegeelastischen Flanken und zwischen den Flanken liegenden auslenkbaren Querstreben ausgebildet, die über elastische Verbindungsmittel an den Flanken angeordnet sind. Bei dieser ersten Ausgestaltung wird somit die gesamte Grundstruktur, sowohl die Seitenwangenstrukturen als auch die Verbindungsstruktur nach dem Finray-Prinzip aufgebaut. Der zentrale Bereich eines Sitzteiles und/oder einer Rückenlehne in dem die Verbindungsgerüststruktur angeordnet ist, wird somit genauso wie die Seitenwangengerüststruktur als Gerüststruktur nach dem Finray-Prinzip ausgebildet.

In einer zweiten bevorzugten Ausführungsform der Erfindung, ist die Verbindungsstruktur ein elastischer Grundkörper, der als elastischer Hohlkörper oder als elastischer Vollkörper ausgebildet ist. Die Verbindungskörper werden beispielsweise aus einem Sitzschaum hergestellt. Die Seitenwangenstrukturen sind weiterhin als Gerüststrukturen nach dem Finray-Prinzip ausgebildet. In dieser zweiten Ausführungsform handelt es sich somit um eine Grundstruktur, bei der die Finray-Gerüststruktur ausschließlich für die Seitenwangenstruktur verwendet wird, wobei im zentralen Bereich eines Sitzteiles oder einer Rückenlehne eine reversibel elastische Verbindungsstruktur, beispielsweise der genannte Verbindungskörper angeordnet ist, die nicht nach dem Finray-Prinzip arbeitet.

In einer weiteren bevorzugten Ausgestaltung, die bei beiden Ausführungsformen vorgesehen werden kann, weisen die Seitenwangengerüststrukturen und die Verbindungsstruktur in der ersten oder zweiten Ausführungsform eine die Strukturen überspannende elastische Schicht auf.

Bevorzugt ist ferner, dass die Verbindungsstrukturen in der ersten oder der zweiten Ausführungsform und/oder die Seitenwangengerüststrukturen mindestens eine Verdickung aufweist, die eine verbesserte ergonomische Anpassung der Seitenwangengerüststrukturen und/oder der Verbindungsstrukturen an die Gesäßpartie oder die Rückenpartie einer Person erlaubt.

Insofern die überspannende elastische Schicht ausgeführt ist, wird vorgeschlagen mindestens eine Verdickung in die elastische Schicht zu integrieren.

Vorgesehen ist ferner, dass mindestens eine Gerüststruktur, die in der Seitenwangenstruktur oder wahlweise (erste Ausführungsform) auch in der Verbindungsstruktur als

Verbindungsgerüststruktur ausbildbar ist, eine dreieckige oder eine rechteckige Form aufweist, wobei mehrere Gerüststrukturen der gleichen Form oder unterschiedlicher Formen zu einer Mehrfach-Gerüststruktur zusammensetzbar sind.

Die Erfindung schlägt vor, eine nach dem Finray-Prinzip aufgebaute und funktionierende Gerüststruktur zumindest für Seitenwangenstrukturen eines Fahrzeugsitzes und wahlweise für eine Verbindungsstruktur, die mehrere Seitenwangenstrukturen miteinander verbindet, zu verwenden, wobei die mindestens eine Gerüststruktur biegeelastische Flanken und zwischen den Flanken liegende auslenkbare Querstreben aufweist, die über elastische Verbindungsmittel an den Flanken angeordnet sind, wodurch ein aus einer Richtung über eine biegeelastische Flanke auf die Querstreben der mindestens einen Gerüststruktur wirkender Kraftimpuls, eine ausgleichende autoreaktive Verformung der mindestens einen Gerüststruktur an einer anderen Stelle in entgegen gesetzter Richtung bewirkt.

Der Kraftimpuls ist eine resultierende Kraft, die durch eine sich auf den Fahrzeugsitz aufsetzende Person an einer Stelle auf die mindestens eine Seitenwangengerüststruktur ausgeübt wird, wodurch sich die mindestens eine Seitenwangengerüststruktur an einer anderen Stelle selbsttätig in entgegen gesetzter Richtung zur Richtung des Kraftimpulses derart auf die sich aufsetzende Person zubewegt, dass der Seitenhalt der Person im Fahrzeugsitz verbessert wird.

In einer bevorzugten Ausgestaltung der Erfindung bildet in einer Ausgangsposition der Grundstruktur eine Oberseite einer oder mehrerer Seitenwangengerüststrukturen gemeinsam mit der Oberseite der Verbindungsstruktur (der ersten oder zweiten Ausführungsform) eine im Wesentlichen ebene Fläche.

In einer anderen bevorzugten Ausgestaltung der Erfindung ist in einer Ausgangsposition der Grundstruktur eine Oberseite einer oder mehrerer Seitenwangengerüststrukturen gegenüber der Verbindungsstruktur (der ersten oder zweiten Ausführungsform) leicht geneigt angeordnet, so dass die Grundstruktur in der Ausgangsposition insgesamt bereits eine im Wesentlichen leicht geneigte Wannenkontur aufweist.

Weitere bevorzugte Ausgestaltungen der Erfindung ergeben sich aus den übrigen in den Unteransprüchen genannten Merkmalen.

Die Erfindung wird nachfolgend anhand der zugehörigen Zeichnungen näher erläutert. Es zeigen:
- Figur 1A: eine schematische Darstellung einer Verformung einer dreieckigen autoreaktiven Gerüststruktur bei Einwirkung einer Kraft;
- Figur 1 B: schematische Darstellungen verschiedener Ausführungsvarianten dreieckiger autoreaktiver Gerüststrukturen;
- Figur 1C: eine Darstellung des Verformungsverhaltens der in Figur 1 B schematisch dargestellten autoreaktiven Gerüststrukturen;
- Figur 2A: eine schematische Darstellung einer Verformung einer rechteckigen autoreaktiven Gerüststruktur bei Einwirkung einer Kraft;
- Figur 2B: schematische Darstellungen verschiedener Ausführungsvarianten rechteckiger autoreaktiver Gerüststrukturen;
- Figur 2C: eine Darstellung des Verformungsverhaltens der in Figur 2B schematisch dargestellten autoreaktiven Gerüststrukturen;
- Figur 3A: eine schematische Darstellung einer Verformung einer verschiedene Formen kombinierenden autoreaktiven Gerüststruktur bei Einwirkung einer Kraft;
- Figur 3B: schematische Darstellungen verschiedener Ausführungsvarianten mit spezifisch ausgebildeten und kombinierten autoreaktiven Gerüststrukturen;
- Figur 3C: eine Darstellung des Verformungsverhaltens der in Figur 3B schematisch dargestellten autoreaktiven Gerüststrukturen;
- Figur 4A, 4B: eine autoreaktive Gerüststrukturen aufweisende Grundstruktur eines Sitzteiles eines Fahrzeugsitzes gemäß einer zweiten Ausführungsform mit Seitenwangenstrukturen in einer Ausgangsposition (Figur 4A) und einer Verstellposition (Figur 4B).

Die Erfindung wird nachfolgend erläutert. Für die Zwecke der vorliegenden Beschreibung soll mit "+x" ("plus x") die übliche Fahrtrichtung eines Fahrzeugs bezeichnet werden, mit "-x" ("minus x") die Richtung entgegen seiner üblichen Fahrtrichtung, mit "y" wird die Richtung in der Horizontalen quer zur x-Richtung bezeichnet, und mit "z" wird die Richtung in der Vertikalen quer zur x-Richtung bezeichnet. Diese Bezeichnungsweise der Raumrichtungen in kartesischen Koordinaten entspricht dem in der Kraftfahrzeugindustrie allgemein verwendeten Koordinatensystem.

Wenn nachfolgend von einer "autoreaktiven" Struktur die Rede ist, so ist eine durch einen einwirkenden Kraftimpuls "auto"matisch ihre Form ändernde "reaktive" Gerüststruktur gemeint, die unter Ausnutzung bionischer Ansätze, dem vorne beschriebenen Finray-Prinzip, gehorcht.

Nachfolgend werden verschiedene Ausgestaltungen autoreaktiver Gerüststrukturen zur Verwendung in einem Sitzteil 100 und/oder einer Rückenlehne beschrieben:

### Erste Ausgestaltung:

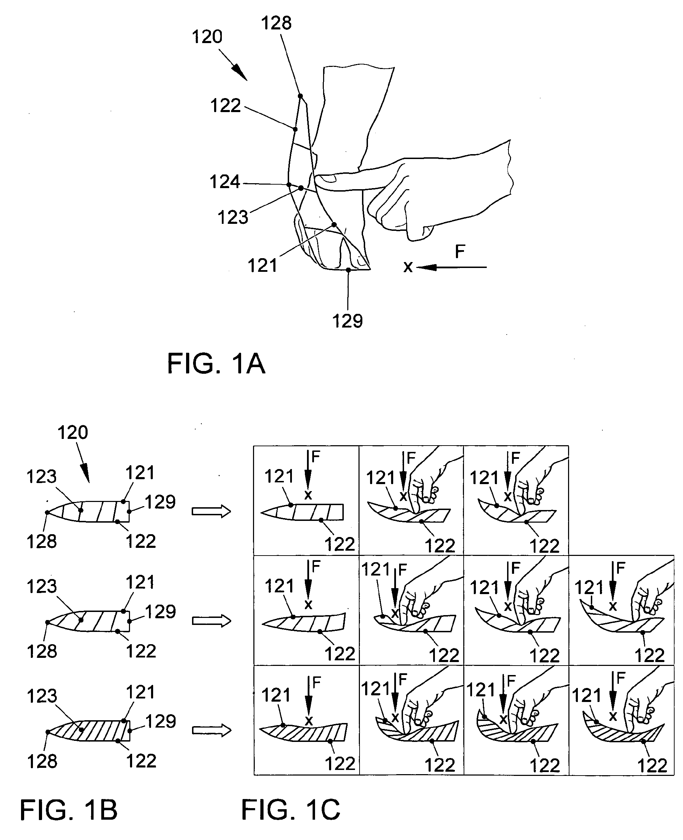

Figur 1A zeigt eine schematische Darstellung einer Verformung einer dreieckigen autoreaktiven Seitenwangengerüststruktur 120 bei Einwirkung einer Kraft F, die nachfolgend nur als Gerüststruktur 120 bezeichnet wird. In der ersten Ausgestaltung ist die autoreaktive Gerüststruktur 120 - im Schnitt gesehen - dreieckig ausgebildet. Die Gerüststruktur 120 weist eine erste biegeelastische Flanke 121 und eine zweite biegeelastische Flanke 122 auf. Zwischen den biegeelastischen Flanken 121, 122 sind über elastische Verbindungsmittel 124 Querstreben 123 elastisch beweglich angeordnet. Die biegeelastischen Flanken 121, 122 und die Querstreben 123 können als flächige, plattenartige Gebilde ausgeführt sein. In der dreieckigen Ausgestaltung bildet die Gerüststruktur 120 einends eine Spitze 128 und anderenends einen eine Basis bildenden Steg 129, der durch eine Querstrebe 123 gebildet wird, die zwischen den auf einer Seite auseinander laufenden Enden der biegeelastischen Flanken 121, 122 angeordnet ist.

Figur 1B zeigt schematische Schnittdarstellungen verschiedener Ausführungsvarianten der ersten Ausgestaltung, wobei sich die Ausführungsvarianten in der Ausrichtung der Querstreben 123 zwischen den biegeelastischen Flanken 121, 122 unterscheiden. Je nach Anzahl und Ausrichtung der Querstreben 123 zwischen den biegeelastische Flanken 121, 122 wird beim Einwirken einer punktuell oder flächig an der ersten biegeelastischen Flanke 121 angreifenden Kraft F, die einen Kraftimpuls auf die Gerüststruktur 120 ausübt, eine jeweils unterschiedliche Verformung der Gerüststruktur 120 bewirkt. Die Richtung der Verformung ist der Richtung des Kraftimpulses entgegengesetzt.

Anhand der Figuren 1A und 1C ist die Verformung der dreieckigen autoreaktiven Gerüststruktur 120 erkennbar. In Figur 1A ist die verformte Gerüststruktur 120 im Schnitt dargestellt, nachdem die Kraft F in x-Richtung auf die erste biegeelastische Flanke 121 eingewirkt hat. Die Ausgangsposition und Ausgestaltung der in Figur 1A dargestellten Gerüststruktur 120 entspricht der oberen Abbildung gemäß Figur 1B. Die in Figur 1A dargestellte Verformung ergibt sich, wenn die Gerüststruktur 120 im Bereich des Steges 129 ortsfest fixiert ist.

Anders verhält es sich, wie Figur 1C zeigt, wenn nicht der Steg 129, sondern die zweite biegeelastische Flanke 122 zumindest teilweise ortsfest fixiert ist. Das dann jeweils auftretende Verformungsverhalten ist in den Abbildungen der Figur 1C dargestellt, wobei jeder der horizontalen Folge von Abbildungen der Figur 1C der jeweils in Figur 1B links dargestellte Aufbau der Gerüststruktur 120 zugrunde liegt. Es ist sichtbar, dass sich das Verformungsverhalten der Gerüststrukturen 120 ändert. Je nachdem, wo die Kraft F an der Gerüststruktur 120 angreift, wird ein bestimmtes Verformungsverhalten der jeweiligen Gerüststruktur 120 erzeugt.

### Zweite Ausgestaltung:

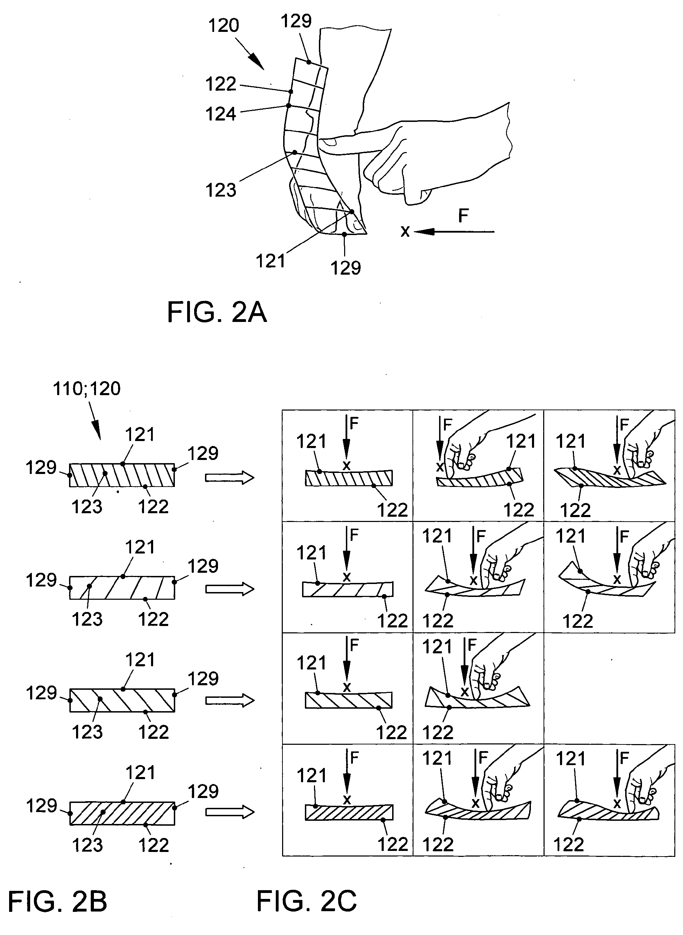

Figur 2A zeigt eine schematische Darstellung einer Verformung einer rechteckigen, insbesondere quaderförmigen Seitenwangengerüststruktur 120 oder einer Verbindungsgerüststruktur 110 bei Einwirkung einer Kraft F, die nachfolgend nur noch als Gerüststruktur 110, 120 bezeichnet wird. In der zweiten Ausgestaltung ist die autoreaktive Gerüststruktur 110, 120 - im Schnitt gesehen - rechteckig ausgebildet. Die Gerüststruktur 110, 120 weist wiederum eine erste biegeelastische Flanke 121 und eine zweite biegeelastische Flanke 122 auf, zwischen denen mittels elastischen Verbindungsmitteln 124 Querstreben 123 elastisch beweglich angeordnet sind. Die biegeelastischen Flanken 121, 122 können auch in der zweiten Ausgestaltung als flächige, plattenartige Gebilde ausgeführt werden. In der rechteckigen Ausgestaltung bildet die Gerüststruktur 110, 120 beidends jeweils einen eine Basis bildenden Steg 129, der jeweils durch eine Querstrebe 123 gebildet wird. Die jeweilige Querstrebe 123 ist zwischen den auf beiden Seiten auseinander laufenden Enden der biegeelastischen Flanken 121, 122 angeordnet.

Figur 2B zeigt schematische Schnittdarstellungen verschiedener Ausführungsvarianten der ersten Ausgestaltung, wobei sich die Ausführungsvarianten in der Ausrichtung der Querstreben 123 zwischen den biegeelastischen Flanken 121, 122 unterscheiden. Je nach Anzahl und Ausrichtung der Querstreben 123 zwischen den biegeelastische Flanken 121, 122 wird beim Einwirken einer punktuell oder flächig an der ersten biegeelastischen Flanke 121 angreifenden Kraft F, die einen Kraftimpuls auf die Gerüststruktur 110, 120 ausübt, eine jeweils unterschiedliche Verformung der Gerüststruktur 110, 120 bewirkt. Die Richtung der Verformung ist der Richtung des Kraftimpulses entgegengesetzt.

Anhand der Figur 2A und 2C ist die Verformung einer rechteckigen autoreaktiven Gerüststruktur 110, 120 erkennbar. In Figur 2A ist die verformte Gerüststruktur im Schnitt dargestellt, nachdem die Kraft F in x-Richtung auf die erste biegeelastische Flanke 121 eingewirkt hat. Die Ausgangsposition und Ausgestaltung der in Figur 2A dargestellten Gerüststruktur 110, 120 entspricht der oberen Abbildung gemäß Figur 2B. Die in Figur 2A dargestellte Verformung ergibt sich, wenn die Gerüststruktur 110, 120 im Bereich des unteren Steges 129 ortsfest fixiert ist.

Anders verhält es sich, wie Figur 2C zeigt, wenn nicht der Steg 129, sondern die zweite biegeelastische Flanke 122 zumindest teilweise ortsfest fixiert ist. Das dann jeweils auftretende Verformungsverhalten ist in den Abbildungen der Figur 2C dargestellt, wobei jeder der horizontalen Folge von Abbildungen der jeweils in Figur 2B links dargestellte Aufbau der Gerüststruktur 110, 120 zu Grunde liegt. Es ist sichtbar, dass sich das Verformungsverhalten der Gerüststrukturen 110, 120 ändert. Je nachdem, wo die Kraft F an der Gerüststruktur 110, 120 angreift, wird ein bestimmtes Verformungsverhalten der jeweiligen Gerüststruktur 110, 120 erzeugt.

### Weitere Ausgestaltungen:

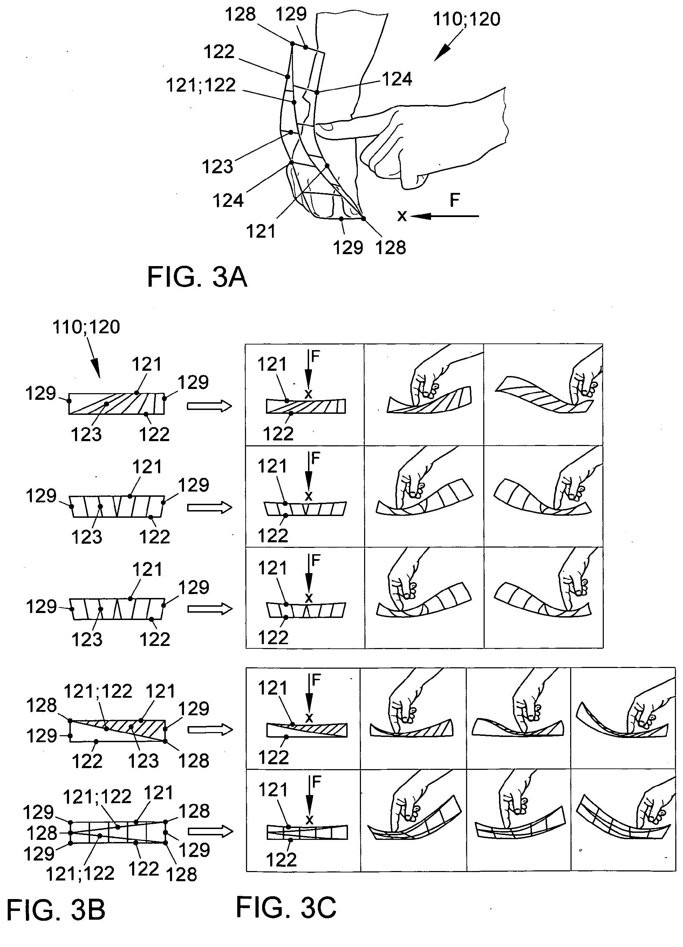

Figur 3A zeigt eine schematische Darstellung einer Verformung einer aus zwei dreieckigen autoreaktiven Seitenwangengerüststruktur 120 und einer autoreaktiven Verbindungsgerüststruktur 110 die als Mehrfach-Gerüststruktur ausgebildet sind, bei Einwirkung einer Kraft F aus x-Richtung. Diese werden nachfolgend wieder nur als Gerüststrukturen 110, 120 bezeichnet. Die aus zwei dreieckigen Gerüststrukturen 110, 120 ausgebildete Mehrfach-Gerüststruktur wird auch als Doppel-Gerüststruktur oder "Doppel-Finray" bezeichnet. Die Doppel-Gerüststruktur zeigt - im Schnitt gesehen - zwei dreieckige Strukturen. Die Doppel-Gerüststruktur weist zur Ausbildung der ersten dreieckigen Gerüststruktur 110, 120 eine erste biegeelastische Flanke 121 und eine zweite biegeelastische Flanke 122 auf, die zugleich die erste biegeelastische Flanke 121 für die nächste dreieckige Gerüststruktur 110, 120 ist. Dieser ersten biegeelastischen Flanke 121 liegt eine zweite biegeelastische Flanke 122 der zweiten dreieckigen Gerüststruktur 110, 120 gegenüber. Jede der beiden dreieckigen Gerüststrukturen 110, 120 weist Querstreben 123 auf, die wiederum als flächige, plattenartige Gebilde ausgeführt sein können. In dieser Ausgestaltung bildet die Doppel-Gerüststruktur an beiden Enden eine Basis, die sowohl durch einen Steg 129 als auch durch eine Spitze 128 gekennzeichnet ist, die durch beide Gerüststrukturen 110, 120 ausgebildet wird.

Anhand der Figur 3A ist die Verformung einer autoreaktiven Doppel-Gerüststruktur erkennbar. In Figur 3A ist die verformte Doppel-Gerüststruktur im Schnitt dargestellt, nachdem die Kraft F in x-Richtung auf die erste biegeelastische Flanke 121 eingewirkt hat. Die in Figur 3A dargestellte Verformung ergibt sich, wenn die Gerüststruktur 110, 120 im Bereich der unteren Basis aus Spitze 128 und Steg 129 ortsfest fixiert ist.

Figur 3B zeigt weitere spezielle schematische Schnittdarstellungen weiterer Ausgestaltungen, wobei sich die drei oberen Ausgestaltungen in der Ausrichtung der Querstreben 123 zwischen den biegeelastischen Flanken 121, 122 unterscheiden. Diese drei oberen Ausgestaltungen sind keine Doppel-Gerüststrukturen. Je nach Anzahl und Ausrichtung der Querstreben 123 zwischen den biegeelastischen Flanken 121, 122 wird beim Einwirken einer punktuell oder flächig an der ersten biegeelastischen Flanke 121 angreifenden Kraft F, die einen Kraftimpuls auf die Gerüststruktur 110, 120 ausübt, eine jeweils unterschiedliche Verformung der Gerüststruktur 110, 120 bewirkt. Die Richtung der Verformung ist der Richtung des Kraftimpulses entgegengesetzt.

Die Besonderheit der Ausgestaltung der Gerüststruktur 110, 120, die in Figur 3B ganz oben dargestellt ist, besteht darin, dass die Querstreben 123 schräg zwischen den biegeelastischen Flanken 121, 122 angeordnet sind. Ein geringer Teil der Gerüststruktur 110, 120 ist sogar ohne Querstreben 123 ausgebildet.

Die Besonderheit der darunter liegenden Ausgestaltung der Gerüststruktur 110, 120 besteht darin, dass die Querstreben 123 im zentralen Bereich der Gerüststruktur 110, 120 ein <V> bilden.

Die Besonderheit der wiederum darunter liegenden Ausgestaltung der Gerüststruktur 110, 120, die in Figur 3B als Drittes von oben dargestellt ist, besteht darin, dass die Querstreben 123 im zentralen Bereich der Gerüststruktur 110, 120 ein auf dem Kopf stehendes <V> bilden.

Figur 3B zeigt weitere schematische Schnittdarstellungen weiterer Ausgestaltungen, wobei sich die beiden unteren Ausgestaltungen der Figur 3B von den drei oberen Ausgestaltungen dahingehend unterscheiden, dass es sich um Mehrfach-Gerüststrukturen handelt. Diese werden unter Benutzung der jeweils gleichen dreieckigen Form miteinander kombiniert. Es besteht erfindungsgemäß die Möglichkeit, Gerüststrukturen mit unterschiedlichen Formen miteinander zu kombinieren.

Bei der Ausgestaltung, die in Figur 3B als zweite von unten gesehen dargestellt ist, handelt es sich um eine Doppel-Gerüststruktur, wie sie bereits in Figur 3A gezeigt und zur Figur 3A beschrieben worden ist. Der Unterschied zu der Ausgestaltung gemäß Figur 3A besteht darin, dass bei einer der beiden dreieckigen Gerüststrukturen 110, 120 vollständig auf die Anordnung von Querstreben 123 verzichtet worden ist.

Schließlich handelt es sich bei der in Figur 3B ganz unten dargestellten Ausgestaltung um eine Dreifach-Gerüststruktur. Die Dreifach-Gerüststruktur zeigt - im Schnitt gesehen - drei dreieckige Gerüststrukturen. Die Dreifach-Gerüststruktur weist zur Ausbildung der ersten dreieckigen Gerüststruktur 110, 120 eine erste biegeelastische Flanke 121 und eine zweite biegeelastische Flanke 122 auf, der eine zweite biegeelastische Flanke 122 der zweiten dreieckigen Gerüststruktur 110, 120 gegenüberliegt, die wiederum gleichzeitig die erste biegeelastische Flanke 121 der dritten Gerüststruktur 110, 120 bildet, die über eine zweite biegeelastische Flanke 122 abgeschlossen ist. Jede der drei dreieckigen Gerüststrukturen 110, 120 weist Querstreben 123 auf, die als flächige, plattenartige Gebilde ausgeführt sein können. An einem Ende wird die Basis der Dreifach-Gerüststruktur durch zwei Stege 129 und eine Spitze 128 gebildet, wobei das gegenüberliegende Ende ebenfalls eine Basis aus zwei Spitzen 128 und einem Steg 129 ausbildet. Es wird deutlich, dass auf diese Weise Mehrfach-Gerüststrukturen in einer beliebigen Anzahl von einzelnen Gerüststrukturen verschiedener Ausgestaltungen ausbildbar sind. Unterschiedliche Formen mehrerer Gerüststrukturen können zu einer Mehrfach-Gerüststruktur kombiniert werden.

Das jeweilige Verformungsverhalten der in den Schnittdarstellungen der Figur 3B von oben nach unten dargestellten Gerüststrukturen 110, 120 ist in den Abbildungen der Figur 3C dargestellt, wobei jeder der horizontalen Folge von Abbildungen der jeweils in Figur 3B links dargestellte und zuvor beschriebene Aufbau der Gerüststruktur 110, 120 zu Grunde liegt. Die in den Abbildungen der Figur 3C dargestellte Verformung der jeweiligen Gerüststruktur 110, 120 ergibt sich, wenn die Gerüststruktur 110, 120 mit ihrer zweiten biegeelastischen Flanke 122 zumindest teilweise ortsfest fixiert ist. Es ist auch hier sichtbar, dass sich das Verformungsverhalten der Gerüststrukturen 110, 120 ändert. Je nachdem, wo die Kraft F an der Gerüststruktur 110, 120 angreift, wird ein bestimmtes Verformungsverhalten der jeweiligen Gerüststruktur 110, 120 erzeugt.

Die zuvor beschriebenen vielfältigen Ausgestaltungsmöglichkeiten und Kombinationen davon, können zur Ausbildung einer autoreaktiven Seitenwangenstruktur und wahlweise einer Verbindungsstruktur zum Einsatz kommen.

Nachfolgend wird anhand der Schnittfiguren 4A und 4B - in Zusammenschau - eine der möglichen Ausführungsformen, nämlich die zweite Ausführungsform einer Grundstruktur eines Sitzteiles eines Fahrzeugsitzes beschrieben, bei der die Seitenwangenstrukturen als autoreaktive Seitenwangengerüststrukturen 120 und die Verbindungsstruktur als reversibel elastischer Verbindungskörper 110' ausgebildet ist. Diese zweite Ausführungsform ist nur beispielhaft zu verstehen. Im Folgenden wird teilweise auf die erste - nicht näher dargestellte - Ausführungsform eingegangen, bei der die Verbindungsstruktur als Verbindungsgerüststruktur 110 nach dem Finray-Prinzip ausgebildet ist. Die nachfolgende Beschreibung betrifft ein Sitzteil 100. Die Beschreibung kann auf Seitenwangengerüststrukturen und Verbindungsstrukturen in der ersten oder zweiten Ausführungsform einer Rückenlehne analog übertragen werden.

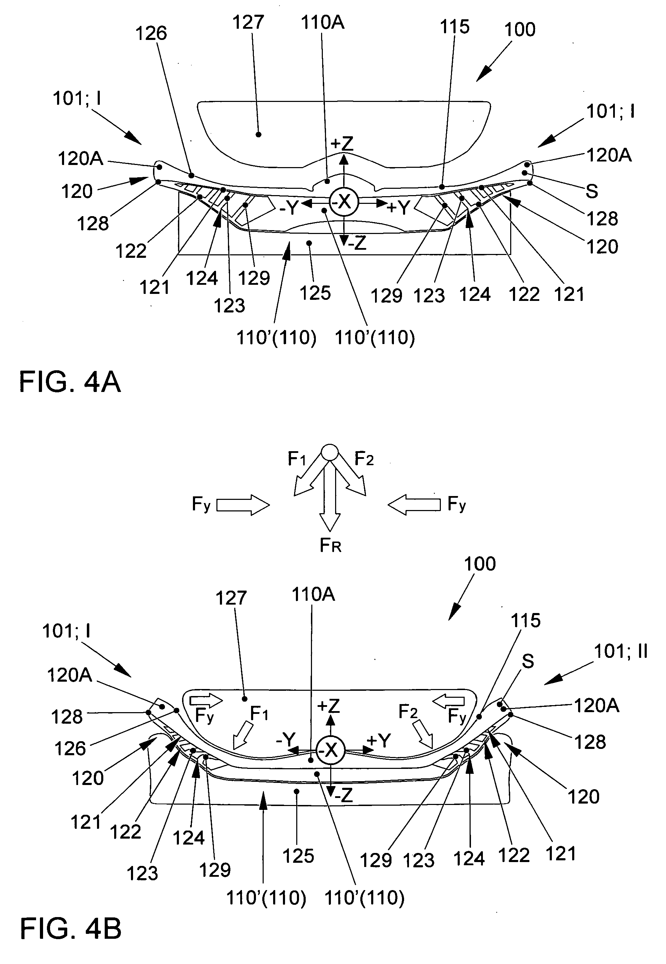

Das kartesische Koordinatensystem ist in Figur 4A, 4B derart angeordnet, dass der Nullpunkt in einer Ausgangslage I innerhalb des reversibel elastisch ausgebildeten Verbindungskörpers 110' liegt. Der Betrachter blickt von vorn auf ein quer zur Blickrichtung geschnittenes Sitzteil 100 in "-x" ("minus x") - Richtung, mithin entgegen der üblichen Fahrtrichtung.

Die "y-Achse" erstreckt sich, ausgehend von dem Nullpunkt von links in -y-Richtung nach rechts in +y-Richtung. Die "y-Achse" ist somit als Horizontale quer zur x-Richtung definiert. Die "z-Achse" erstreckt sich, ausgehend von dem Nullpunkt nach oben in +z-Richtung und nach unten in -z-Richtung. Die "z-Achse" ist somit als Vertikale quer zur x-Richtung definiert.

Die y-Achse liegt in Figur 4A in etwa parallel zu einer Anlagefläche 126, die eine Oberseite der Grundstruktur des Sitzteiles 100 in der Ausgangslage I bildet, bevor durch einen Aufsitzenden eine Verstellposition 11 der Grundstruktur des Sitzteiles 100 hervorgerufen wird.

Die Grundstruktur liegt auf einer Sitzwannenstruktur 125. Die Grundstruktur und die Sitzwannenstruktur 125 sind an einer geeigneten Stelle, bei der keine Bewegung der Grundstruktur gegenüber der Sitzwannenstruktur 125 stattfindet, miteinander verbunden. Vorzugsweise wird die Verbindung im Bereich der Verbindungsstruktur 110, 110' ausgeführt. Es ist vorgesehen, die Unterseite der Verbindungsstruktur 110, 110' mit der Oberseite der Sitzwannenstruktur 125 zu verbinden. Die Verbindungsstruktur 110, 110' ist dann gegenüber der Sitzwannenstruktur 125 ortsfest.

In Figur 4A übt das dargestellte Gesäß 127 einer Person beziehungsweise die Oberschenkel einer Person noch keine Kraft auf die Grundstruktur des Sitzteiles 100 aus. Die Grundstruktur kann gepolstert, beispielsweise mit einem Polsterschaum umgeben sein. Die in Figur 4A dargestellte Grundstruktur ist nicht gepolstert. Bei der nachfolgend beschriebenen Ausgestaltung ist eine Polsterung nicht vorgesehen, woraus deutlich wird, dass eine Polsterung der Grundstruktur nicht unbedingt notwendig ist.

Die Grundstruktur weist eine linke und eine rechte Seitenwangengerüststruktur 120 auf. Die Seitenwangengerüststrukturen 120 sind über die Verbindungsstruktur 110', 100 (110' erste Ausführungsform oder 110 zweite Ausführungsform) miteinander verbunden.

Die Verbindungsstruktur ist im Ausführungsbeispiel - gemäß der zweiten Ausführungsform - als elastischer Verbindungskörper 110' ausgebildet.

Im Ausführungsbeispiel ist ein elastischer Vollkörper beispielsweise aus einem Sitzschaum ausgebildet.

Auf der zu dem Gesäß 127 gerichteten Seite ist eine das Gesäß axialsymmetrisch in x-Richtung schneidende erste Verdickung 110A in +z-Richtung ausgebildet, die sich in -x-Richtung in die Blattebene hinein und in +x-Richtung aus der Blattebene heraus erstreckt, wodurch eine Anpassung der Anlagefläche 126 der Grundstruktur an das Gesäß 127 erfolgt. Diese Verdickung 110A stellt eine optionale Ausgestaltung dar. Die Verdickung 110A kann Teil des Verbindungskörpers 110' oder der Verbindungsgerüststruktur 110 sein.

Im Ausführungsbeispiel ist die Verdickung 110A Teil einer Schicht S, die auf dem Verbindungskörper 110' oder der Verbindungsgerüststruktur 110 angeordnet ist, wie noch näher erläutert wird.

Die Anlagefläche 126 des Gesäßes 127 in der Ausgangsposition I der Grundstruktur, wird durch die mit dem Bezugszeichen 126 gekennzeichnete Linie symbolisiert. Es ist ersichtlich, dass die Seitenwangen 101 so lange noch keine Kraft auf die Grundstruktur wirkt, in der Ausgangsposition I bleiben. Eine Seitenunterstützung, das heißt ein Seitenhalt durch Seitenwangen 101 wird noch nicht benötigt, da die Person noch nicht auf dem Sitzteil 100 aufsitzt.

Die Seitenwangen 101 sind deshalb noch nicht nach oben in +z-Richtung ausgestellt, wodurch der Vorteil erwächst, dass bei einem Einsteigen einer Person und beim Platz nehmen auf dem Fahrzeugsitz eines Fahrzeuges keine Seitenwange den Einstieg beziehungsweise das Aufsitzen auf den Fahrzeugsitz des Fahrzeuges in irgend einer Weise behindert.

Dabei bildet beispielsweise in einer möglichen Ausgestaltung eine Oberseite der Seitenwangengerüststrukturen 120 gemeinsam mit der Verbindungsstruktur 110' oder der Verbindungsgerüststruktur 110 in der Ausgangsposition I der Grundstruktur eine im Wesentlichen ebene Fläche (nicht dargestellt).

In einer anderen möglichen Ausgestaltung ist die jeweilige Oberseite der Seitenwangengerüststrukturen 120 gegenüber der Verbindungsstruktur 110', 110 in der Ausgangsposition I der Grundstruktur leicht geneigt angeordnet, so dass bereits in der Ausgangsposition I der Grundstruktur eine im Wesentlichen leicht geneigte Wannenkontur 115 entsteht, wie sie in Figur 4A gezeigt ist.

Die autoreaktiven Seitenwangengerüststrukturen 120 sind im Ausführungsbeispiel dreieckig ausgebildet. Weitere Details zur möglichen Ausgestaltung der autoreaktiven Seitenwangengerüststrukturen 120 können aus der vorhergehenden Beschreibung im Zusammenhang mit den Figuren 1A bis 1C entnommen werden.

Die Seitenwangengerüststrukturen 120 weisen jeweils eine erste biegeelastische Flanke 121 und eine zweite biegeelastische Flanke 122 auf. Zwischen den biegeelastischen Flanken 121, 122 sind über elastische Verbindungsmittel 124 Querstreben 123 elastisch beweglich angeordnet. Die biegeelastischen Flanken 121, 122 und die Querstreben 123 können als flächige, plattenartige Gebilde ausgeführt sein. In der dreieckigen Ausgestaltung bildet die Gerüststruktur 120 einends eine Spitze 128 und anderenends einen eine Basis bildenden Steg 129, der ebenfalls durch eine Querstrebe 123 gebildet wird, die zwischen den auf einer Seite auseinander laufenden Enden der biegeelastischen Flanken 121, 122 angeordnet ist.

Die erste biegeelastische Flanke 121 verläuft in der Ausgangsposition I jeweils in +/-y-Richtung und ist im Ausführungsbeispiel der Figur 4A gegenüber einer gedachten horizontal liegenden Fläche im Bereich der Seitenwangen 101 nur leicht nach oben zur Spitze 128 hin geneigt ausgebildet. Die Querstreben 123 verlaufen in -x-Richtung. Die zweite biegeelastische Flanke 122 verläuft jeweils gegenüber der gedachten horizontal liegenden Fläche schräg und somit gegenüber der ersten biegeelastischen Flanke 121 in -z-Richtung geneigt. Die Oberseiten der ersten biegeelastischen Flanke 121 (links, rechts) der Seitenwangengerüststrukturen 120 bilden gegenüber den zweiten biegeelastischen Flanke 122 einen spitzen Winkel. Die zweite biegeelastische Flanke 122 (links, rechts) der Seitenwangengerüststrukturen 120 bilden jeweils die Unterseite der Seitenwangengerüststrukturen 120.

Die jeweilige Oberseite der Seitenwangengerüststrukturen 120 und des Verbindungskörpers 110' weisen die bereits erwähnte optional anordbare elastische Schicht S auf, die eine erhöhte Stabilität der Grundstruktur insgesamt gewährleistet und für eine Komforterhöhung sorgt. Die elastische Schicht S ist mit einer umlaufenden Linie gekennzeichnet. Es wird vorgeschlagen, die elastische Schicht S aus einem den Sitzkomfort erhöhenden Sitzschaum auszubilden.

Im zentralen Bereich des Verbindungskörpers 110' liegt die in Längsrichtung +/-x-Richtung des Sitzteiles 100 verlaufende zum Aufsitzenden in +z-Richtung hin gerichtete erhabene Verdickung 110A, die gemäß dem Ausführungsbeispiel in die Schicht S integriert ist.

Die Schicht S trägt dazu bei, die Strebenstruktur der Querstreben 123 der Seitenwangengerüststrukturen 120 oder der Verbindungsstrukturen 110', 110 gegenüber einer aufsitzenden Person, insbesondere gegenüber dem Gesäß 127 abzupolstern.

Die Schicht S wird ferner dazu verwendet, im Bereich der Spitze 128 der Seitenwangengerüststrukturen 120 optional eine weitere Verdickung 120A auszubilden, die dazu dient, dass die als Seitenwangengerüststruktur 120 ausgebildete jeweilige Seitenwange 101 in ihrer Verstellposition II (Figur 4B) seitlich näher an das Gesäß 127 und seitlich an die Oberschenkel des Aufsitzenden heranrückt.

Die Verdickung 120A kann auch in einer anderen Ausführungsvariante direkt auf der jeweiligen Seitenwangengerüststruktur 120 ausgebildet werden, so dass sie nicht in die Schicht S integriert ist.

Beim Aufsitzen einer Person werden die Seitenwangengerüststrukturen 120 nach dem Finray-Prinzip sozusagen "automatisch" verstellt. Die durch eine Person beim Aufsitzen der Person auf die Grundstruktur des Sitzteiles 100 ausgeübte resultierende Kraft F_{R} wird in Figur 4B durch das Gesäß 127 symbolisiert, welches in -z-Richtung gemäß des zugehörigen Kraftpfeiles F_{R} auf die Grundstruktur drückt. Die Grundstruktur nimmt die Verstellposition II ein, die nachfolgend detailliert erläutert wird. Die Kraft F_{R} wird über das Gesäß und die Oberschenkel auf das Sitzteil 100 übertragen.

Die Kraftvektoren F_{R}, F₁, F2, die den Kraftimpuls zur Bewirkung der ausgleichenden autoreaktiven Verformung der Seitenwangengerüststrukturen 120 geben, sind grafisch in einem Vektorplan dargestellt. Die resultierende Kraft F_{R} wird in zwei Kraftvektoren F₁ und F₂ zerlegt, die in etwa in Richtung der Basis 129 der Seitenwangengerüststrukturen 120 zeigen.

Beim Einwirken der flächig an der ersten biegeelastischen Flanke 121 angreifenden Kraft F₁ beziehungsweise F₂ wird jeweils ein Kraftimpuls einends der Seitenwangengerüststruktur 120 auf die Seitenwangengerüststruktur 120 ausgeübt, die eine Verformung der Seitenwangengerüststrukturen 120 bewirkt, die der Richtung des Kraftimpulses entgegengesetzt ist. Auf die Spitzen 128 der Seitenwangengerüststrukturen 120 wird anderenends keine Kraft ausgeübt, weshalb sich die Spitzen 128 - auf einer halbkreisförmigen Laufbahn - in entgegen gesetzter Richtung zu den Kraftvektoren F₁ und F₂ nach oben in +z-Richtung und nach innen in +y-Richtung (linke Seitenwange 101) beziehungsweise -y-Richtung (rechte Seitenwange 101) bewegen.

Sie drücken dabei die beiden Seitenwangengerüststrukturen 120 in die Verstellposition II und die jeweilige Oberseite der Seitenwangengerüststrukturen 120 an den Aufsitzenden heran und erzeugen den gewünschten beidseitigen Seitenhalt F_{y}, wobei die jeweils zugehörigen Kraftvektoren in Figur 4B mit den mit den Bezugszeichen F_{y} gekennzeichneten Pfeilen verdeutlich werden.

Aus der Beschreibung wird deutlich, dass sich die sogenannten "Finray"-Seitenwangen 101 beim Einsitzen einer Person auf den Fahrzeugsitz - entweder beim Aufsitzen auf ein Sitzteil 100 oder beim Anlehnen an eine Rückenlehne - von selbst in die Verstellposition II begeben.

Anders ausgedrückt, kommt es beim Einsitzen einer Person auf die relativ ebene Sitzkontur in ihrer Ausgangsposition I, gemäß Figur 4A zur selbsttätigen Ausbildung eine Sitzkontur in der Verstellposition II durch die sich selbstaufrichtenden Seitenwangen 101.

Beim Sitzteil 100 kommt es zu einem Aufrichten der die "Finray"-Seitenwangen 101 ausbildenden Seitenwangengerüststrukturen 120 in +z-Richtung. Bei der Rückenlehne kommt es zu einem Ausstellen der die "Finray"-Seitenwangen 101 ausbildenden Seitenwangengerüststrukturen 120 in Fahrtrichtung +x-Richtung.

Das Aufrichten der Seitenwangen 101 des Sitzteiles 100 in +z-Richtung beziehungsweise die Ausstellung der Seitenwangen 101 der Rückenlehne in +x-Richtung bewirkt in vorteilhafter Weise einen Formschluss zwischen den Seitenwangen 101 und den Seitenbereichen des Gesäßes (Hüftbereiche) und den Seitenbereichen der Oberschenkeln der den Fahrzeugsitz benutzenden Person.

Durch den durch den Formschluss bewirkten verbesserten beidseitigen Seitenhalt F_{y} wird in vorteilhafter Weise sowohl für die Kurvenfahrt - eine Komfortverbesserung - als auch für einen etwaigen Crashfall - eine Sicherheitserhöhung - erzielt.

Durch den Kraftimpuls F_{R} wird die autoreaktive Verformung der Seitenwangengerüststrukturen 120 hervorgerufen, wodurch der aufsitzenden Person durch die bewirkte Seitenhaltekraft F_{y} ein verbesserter Seitenhalt vermittelt wird.

Durch die Verdickung 120A wird insbesondere der obere Bereich der Oberseite der Seitenwangengerüststruktur 120 der Seitenwange 101 stärker an die seitlichen Bereiche des Gesäßes 127 beziehungsweise die Oberschenkel heran gedrückt. Eine Erhöhung des Sitzkomforts ist die Folge. Der Seitenhalt wird verbessert und die Sitzbreite wird somit "automatisch" unter Ausnutzung des Finray-Prinzips an die Körperkontur des Gesäßes 127 des Aufsitzenden angepasst.

Die sich in der Verstellposition II ergebende Anlagefläche 126 der Seitenwangengerüststrukturen 120 und des Verbindungskörpers 110' ist in Figur 4B wieder als umlaufende Linie dargestellt. Wie aus Figur 4B ferner entnehmbar ist, wird auch die Schicht S und der elastische Verbindungskörper 110' zusammengedrückt. Der Aufsitzende versinkt je nach Elastizität (Hohlkörper oder Vollkörper) des Verbindungskörpers 110' und der Stabilität der angrenzenden Seitenwangengerüststrukturen 120 mehr oder weniger in -z-Richtung im Sitzteil 100.

In der Verstellposition II bildet sich eine gegenüber der Ausgangsposition I (Figur 4A) veränderte Kontur, eine Wannenkontur 115 mit stärker gegenüber der Verbindungsstruktur 110' geneigten Seitenwangengerüststrukturen 120 aus. In dieser Wannenkontur 115 bilden die Seitenwangengerüststrukturen 120 der Seitenwangen 101 eine Anlagefläche 126 aus, die gegenüber der im Wesentlichen ebenen oder nur leicht wannenartigen ausgebildeten Anlagefläche 126 in der Ausgangsposition I (Figur 4A) stark nach oben (+z-Richtung) und innen (+/-y-Richtung) geneigt ist.

Die Verdickung 110A der Schicht S wird beim Aufsitzen einer Person elastisch in -z-Richtung flach gedrückt, wie durch Figur 4B mit Hilfe der mit dem Bezugszeichen 126 gekennzeichneten Linie, welche die Anlagefläche 126 des Gesäßes 127 und/oder der Oberschenkel an der Oberseite der Schicht S symbolisiert, verdeutlicht wird.

Zur Veränderung der Elastizität kann der Verbindungskörper 110' auch als elastischer Hohlkörper aus einem Sitzschaum ausgebildet werden. Es besteht ferner die Möglichkeit die Verbindungsstruktur als Verbindungsgerüststruktur 110 nach dem Finray-Prinzip auszubilden, wie es bereits in der Einleitung im Zusammenhang mit der ersten Ausführungsform beschrieben worden ist.

Die beschriebene Lösung zeichnet sich insbesondere in vorteilhafter Weise dadurch aus, dass zur Verstellung der Seitenwangen 101 keine Aktorik benötigt wird, wie es bei herkömmlichen verstellbaren Seitenwangen der Fall ist. Es stellt sich beim Aufsitzen einer Person auf einen Fahrzeugsitz durch die automatische Verstellung der Seitenwangen 101 ein Komfortgewinn ein, da sich der Seitenhalt durch die Verringerung der Sitzbreite verbessert.

Bei einem Einsatz in der Rückenlehne wird je nachdem wie stark sich der Einsitzende an die Rückenlehne anlehnt nach dem selben Prinzip ein Komfortgewinn hervorgerufen, das sich auch bei Seitenwangen an einer Rückenlehne der Seitenhalt durch die Verringerung der Rückenlehnebreite automatisch verbessert. Diese Funktion spielt bei einem Einsatz in einer Rückenlehne insbesondere in einem möglichen Crashfall eine besonders vorteilhafte Rolle. Wird die Person crashfallbedingt in das Sitzteil 100 vor allem jedoch in die Rückenlehne gedrückt führt die auf die Seitenwangengerüststrukturen 120 einwirkende Crashkraft zu einer automatischen Verstellung der Seitenwangen in +x-Richtung und nach innen je nach Seitenwange 101 in +/-y-Richtung zur Längsachse der Rückenlehne hin. Der Einsitzende wird dadurch unter Ausnutzung des Finray-Prinzips zusätzlich zu den weiteren im Kraftfahrzeug vorhandenen Sicherheitssystemen in dem Fahrzeugsitz fest gehalten.

### Bezugszeichenliste

- 100: Sitzteil
- 101: Seitenwange
- 110: Verbindungsgerüststruktur
- 110': Verbindungskörper
- 110A: erste Verdickung
- 115: Wannenkontur
- 120: Seitenwangengerüststruktur
- 120A: zweite Verdickung
- 121: biegeelastische Flanke
- 122: biegeelastische Flanke
- 123: Querstreben
- 124: elastische Verbindungsmittel
- 125: Sitzwannenstruktur oder Rückenlehnenstruktur
- 126: Anlagefläche
- 127: Gesäß
- 128: Spitze
- 129: Steg
- F_{R}: resultierende Kraft
- F₁: erster Kraftvektor
- F₂: zweiter Kraftvektor
- F_{y}: Kraftvektor einer Seitenhaltekraft
- +x: Richtung in der üblichen Fahrtrichtung eines Fahrzeuges
- -x: Richtung entgegen der üblichen Fahrtrichtung eines Fahrzeuges
- y: Richtung in der Horizontalen quer zur x-Richtung
- z: Richtung in der Vertikalen quer zur x-Richtung
- I: Ausgangsposition
- II: Verstellposition
- S: elastische Schicht

## Patentansprüche

1. Fahrzeugsitz mit einer rückenlehnenseitigen und/oder einer sitzteilseitigen Grundstruktur, die mindestens eine bewegliche Seitenwangenstruktur umfasst, wobei zumindest die Seitenwangenstruktur der Grundstruktur aus mindestens einer Gerüststruktur ausgebildet ist, wobei diese mindestens eine Seitenwangengerüststruktur (120) biegeelastische Flanken (121, 122) und zwischen den Flanken (121, 122) liegende auslenkbare Querstreben (123) aufweist, die über elastische Verbindungsmittel (124) an den Flanken (121, 122) angeordnet sind, **dadurch gekennzeichnet, dass** ein aus einer Richtung über eine biegeelastische Flanke (121) auf die Querstreben (123) der mindestens einen Seitenwangengerüststruktur (120) wirkender Kraftimpuls, eine ausgleichende autoreaktive Verformung der mindestens einen Seitenwangengerüststruktur (120) an einer anderen Stelle in entgegen gesetzter Richtung bewirkt.

2. Fahrzeugsitz nach Anspruch 1, **dadurch gekennzeichnet, dass** der Kraftimpuls eine resultierende Kraft (F_{R}) ist, die durch eine sich auf den Fahrzeugsitz aufsetzende Person an einer Stelle auf die mindestens eine Seitenwangengerüststruktur (120) ausgeübt wird, wodurch sich die mindestens eine Seitenwangengerüststruktur (120) an einer anderen Stelle selbsttätig in entgegen gesetzter Richtung zur Richtung des Kraftimpulses derart auf die sich aufsetzende Person zubewegt, dass der Seitenhalt der Person im Fahrzeugsitz verbessern wird.

3. Fahrzeugsitz nach Anspruch 1, **dadurch gekennzeichnet, dass** die Grundstruktur eine Verbindungsstruktur aufweist.

4. Fahrzeugsitz nach Anspruch 3, **dadurch gekennzeichnet, dass** die Verbindungsstruktur in der Art eines elastischen Verbindungskörpers (110'), insbesondere als Hohlkörper oder Vollkörper ausgebildet ist.

5. Fahrzeugsitz nach Anspruch 3, **dadurch gekennzeichnet, dass** die Verbindungsstruktur eine Verbindungsgerüststruktur (110) ist, die mindestens eine Gerüststruktur mit biegeelastischen Flanken und zwischen den Flanken liegende auslenkbare Querstreben aufweist, die über elastische Verbindungsmittel an den Flanken angeordnet sind.

6. Fahrzeugsitz nach 3 und 4 oder Anspruch 3 und 5, **dadurch gekennzeichnet, dass** die gerüstartigen Seitenwangenstrukturen (120) und der Verbindungskörper (110') beziehungsweise die Verbindungsgerüststruktur (110) nach Anspruch 3 und 4 oder 5 gemeinsam eine die Strukturen (110', 110, 120) überspannende elastische Schicht (S) aufweist.

7. Fahrzeugsitz nach Anspruch 4 oder 5, **dadurch gekennzeichnet, dass** der Verbindungskörper (110') oder die Verbindungsgerüststruktur (110) nach Anspruch 3 und 4 oder 4 und/oder die Seitenwangengerüststrukturen (120) mindestens eine Verdickung (110A, 120A) aufweist/en, die eine verbesserte ergonomische Anpassung der Verbindungsstruktur (110, 110') und/oder der Seitenwangengerüststruktur (120) an die Gesäßpartie (127) und/oder die Unterseite eines Oberschenkels beziehungsweise die Rückenpartie einer Person erlaubt.

8. Fahrzeugsitz nach Anspruch 7, **dadurch gekennzeichnet, dass** mindestens eine Verdickung (110A, 120A) in der Schicht (S) angeordnet ist.

9. Fahrzeugsitz nach Anspruch 5, **dadurch gekennzeichnet, dass** Kraftvektoren (F1, F2) einer durch eine aufsitzende Person auf die rückenlehnenseitige und/oder sitzteilseitige Grundstruktur ausgeübten resultierende Kraft (F_{R}) eine autoreaktive Verformung der Seitenwangengerüststruktur (120) und eine autoreaktive Verformung der Verbindungsgerüststruktur (110) nach Anspruch 4 bewirken, wodurch sich die Seitenwangengerüststruktur (120) in eine Verstellposition (II) begibt, wodurch eine im Seitenwangenbereich gegenüber der Verbindungsstruktur stark geneigte Wannenstruktur (115) ausgebildet wird.

10. Fahrzeugsitz nach Anspruch 3 und 4, **dadurch gekennzeichnet, dass** Kraftvektoren (F1, F2) einer durch eine aufsitzende Person auf die rückenlehnenseitige und/oder sitzteilseitige Grundstruktur ausgeübte resultierende Kraft (F_{R}) eine autoreaktive Verformung der Seitenwangengerüststruktur (120) und eine reversibel elastische Verformung des Verbindungskörpers (110') nach Anspruch 3 oder 4 bewirken, bei der sich die Seitenwangengerüststruktur (120) in eine Verstellposition (II) begibt, wodurch eine im Seitenwangenbereich gegenüber der Verbindungsstruktur stark geneigte Wannenstruktur (115) ausgebildet wird.

11. Fahrzeugsitz nach Anspruch 1, **dadurch gekennzeichnet, dass** die Gerüststrukturen der mindestens einen Seitenwangengerüststruktur (120) eine dreieckige oder eine rechteckige Form aufweist, wobei mehrere Gerüststrukturen der gleichen Form oder unterschiedlicher Formen zu einer Mehrfach-Gerüststruktur zusammensetzbar sind.

12. Fahrzeugsitz nach Anspruch 4, **dadurch gekennzeichnet, dass** die Gerüststrukturen der der Verbindungsgerüststruktur (110) eine dreieckige oder eine rechteckige Form aufweist, wobei mehrere Gerüststrukturen der gleichen Form oder unterschiedlicher Formen zu einer Mehrfach-Gerüststruktur zusammensetzbar sind.

13. Verwendung mindestens einer nach dem Finray-Prinzip aufgebauten und funktionierenden Gerüststruktur zumindest zur Ausbildung einer Seitenwangengerüststruktur eines Fahrzeugsitzes, wobei die mindestens eine Seitenwangengerüststruktur biegeelastische Flanken (121, 122) und zwischen den Flanken (121, 122) liegende auslenkbare Querstreben (123) aufweist, die über elastische Verbindungsmittel (124) an den Flanken (121, 122) angeordnet sind, **dadurch gekennzeichnet, dass** ein aus einer Richtung über eine biegeelastische Flanke (121) auf die Querstreben (123) der mindestens einen Gerüststruktur wirkender Kraftimpuls, eine ausgleichende autoreaktive Verformung der mindestens einen Gerüststruktur an einer anderen Stelle in entgegen gesetzter Richtung bewirkt.

## Claims

1. Vehicle seat with a backrest-side and/or a seat-part-side basic structure which comprises at least one movable sidepiece structure, wherein at least the sidepiece structure of the basic structure is formed from at least one framework structure, wherein said at least one sidepiece framework structure (120) has flexurally elastic flanks (121, 122) and deflectable transverse struts (123) which lie between the flanks (121, 122) and are arranged on the flanks (121, 122) via elastic connecting means (124), **characterized in that** a force pulse acting from one direction on the transverse struts (123) of the at least one sidepiece framework structure (120) via a flexurally elastic flank (121) brings about a compensating autoreactive deformation of the at least one sidepiece framework structure (120) at another point in the opposite direction.

2. Vehicle seat according to Claim 1, **characterized in that** the force pulse is a resulting force (F_{R}) which is exerted at a point on the at least one sidepiece framework structure (120) by a person sitting down onto the vehicle seat, as a result of which the at least one sidepiece framework structure (120) moves towards the sitting-down person automatically at another point in the opposite direction to the direction of the force pulse in such a manner that the side support of the person in the vehicle seat is improved.

3. Vehicle seat according to Claim 1, **characterized in that** the basic structure has a connecting structure.

4. Vehicle seat according to Claim 3, **characterized in that** the connecting structure is designed in the manner of an elastic connecting body (110'), in particular as a hollow body or solid body.

5. Vehicle seat according to Claim 3, **characterized in that** the connecting structure is a connecting framework structure (110) which has at least one framework structure with flexurally elastic flanks and deflectable transverse struts which lie between the flanks and are arranged on the flanks via elastic connecting means.

6. Vehicle seat according to 3 and 4 or Claim 3 and 5, **characterized in that** the framework-like sidepiece structures (120) and the connecting body (110') or the connecting framework structure (110) according to Claim 3 and 4 or 5 together have an elastic layer (S) spanning the structures (110', 110, 120).

7. Vehicle seat according to Claim 4 or 5, **characterized in that** the connecting body (110') or the connecting framework structure (110) according to Claim 3 and 4 or 4 and/or the sidepiece framework structures (120) have/has at least one thickened portion (110A, 120A) which permits an improved ergonomic adaption of the connecting structure (110, 110') and/or of the sidepiece framework structure (120) to the buttock portion (127) and/or the lower side of a thigh or to the spine portion of a person.

8. Vehicle seat according to Claim 7, **characterized in that** at least one thickened portion (110A, 120A) is arranged in the layer (S).

9. Vehicle seat according to Claim 5, **characterized in that** force vectors (F1, F2) of a resulting force (F_{R}) exerted on the backrest-side and/or seat-part-side basic structure by a sitting person bring about an autoreactive deformation of the sidepiece framework structure (120) and an autoreactive deformation of the connecting framework structure (110) according to Claim 4, as a result of which the sidepiece framework structure (120) puts itself into an adjustment position (II), as a result of which a trough structure (115) which is greatly inclined in relation to the connecting structure in the sidepiece region is formed.

10. Vehicle seat according to Claims 3 and 4, **characterized in that** force vectors (F1, F2) of a resulting force (F_{R}) exerted on the backrest-side and/or seat-part-side basic structure by a sitting person bring about an autoreactive deformation of the sidepiece framework structure (120) and a reversibly elastic deformation of the connecting body (110') according to Claim 3 or 4, in which the sidepiece framework structure (120) puts itself into an adjustment position (II), as a result of which a trough structure (115) which is greatly inclined in relation to the connecting structure in the sidepiece region is formed.

11. Vehicle seat according to Claim 1, **characterized in that** the framework structures of the at least one sidepiece framework structure (120) has a triangular or a rectangular shape, wherein a plurality of framework structures of the same shape or different shapes can be combined to form a multiple framework structure.

12. Vehicle seat according to Claim 4, **characterized in that** the framework structures of the connecting framework structure (110) has a triangular or a rectangular shape, wherein a plurality of framework structures of the same shape or different shapes can be combined to form a multiple framework structure.

13. Use of at least one framework structure, which is constructed and functions according to the Finray principle, at least for forming a sidepiece framework structure of a vehicle seat, wherein the at least one sidepiece framework structure has flexurally elastic flanks (121, 122) and deflectable transverse struts (123) which lie between the flanks (121, 122) and are arranged on the flanks (121, 122) via elastic connecting means (124), **characterized in that** a force pulse acting from one direction on the transverse struts (123) of the at least one framework structure via a flexurally elastic flank (121) brings about a compensating autoreactive deformation of the at least one framework structure at another point in the opposite direction.

## Revendications

1. Siège de véhicule comprenant une structure de base du côté du dossier et/ou du côté de la partie d'assise, qui comprend au moins une structure à joues latérales mobile, au moins la structure à joues latérales de la structure de base étant réalisée à partir d'au moins une structure d'armature, cette au moins une structure d'armature à joues latérales (120) présentant des flancs flexibles élastiques (121, 122) et des traverses (123) pouvant être déviées, situées entre les flancs (121, 122), qui sont disposées sur les flancs (121, 122) par le biais de moyens de connexion élastiques (124), **caractérisé en ce qu'**une impulsion de force agissant depuis une direction par le biais d'un flanc flexible élastique (121) sur les traverses (123) de l'au moins une structure d'armature à joues latérales (120) provoque une déformation auto-réactive de compensation de l'au moins une structure d'armature à joues latérales (120) au niveau d'un autre endroit dans la direction opposée.

2. Siège de véhicule selon la revendication 1, **caractérisé en ce que** l'impulsion de force est une force résultante (F_{R}) qui est exercée par une personne assise sur le siège de véhicule à un endroit sur l'au moins une structure d'armature à joues latérales (120), de sorte que l'au moins une structure d'armature à joues latérales (120) s'approche automatiquement de la personne s'asseyant, à un autre endroit dans la direction opposée à la direction de l'impulsion de force, de telle sorte que le maintien latéral de la personne dans le siège de véhicule soit amélioré.

3. Siège de véhicule selon la revendication 1, **caractérisé en ce que** la structure de base présente une structure de connexion.

4. Siège de véhicule selon la revendication 3, **caractérisé en ce que** la structure de connexion est réalisée à la manière d'un corps de connexion élastique (110'), en particulier sous forme de corps creux ou de corps massif.

5. Siège de véhicule selon la revendication 3, **caractérisé en ce que** la structure de connexion est une structure d'armature de connexion (110) qui présente au moins une structure d'armature avec des flancs flexibles élastiques et des traverses pouvant être déviées situées entre les flancs, qui sont disposées au niveau des flancs par le biais de moyens de connexion élastiques.

6. Siège de véhicule selon les revendications 3 et 4 ou les revendications 3 et 5, **caractérisé en ce que** les structures à joues latérales de type armature (120) et le corps de connexion (110'), respectivement la structure d'armature de connexion (110) selon les revendications 3 et 4 ou 5, présentent en commun une couche élastique (S) recouvrant les structures (110', 110, 120).

7. Siège de véhicule selon la revendication 4 ou 5, **caractérisé en ce que** le corps de connexion (110') ou la structure d'armature de connexion (110) selon les revendications 3 et 4 ou 4 et/ou les structures d'armature à joues latérales (120) présente(nt) au moins un épaississement (110A, 120A), qui permet une adaptation ergonomique améliorée de la structure de connexion (110, 110') et/ou de la structure d'armature à joues latérales (120) à la partie des fesses (127) et/ou au côté inférieur d'une cuisse ou à la partie du dos d'une personne.

8. Siège de véhicule selon la revendication 7, **caractérisé en ce qu'**au moins un épaississement (110A, 120A) est disposé dans la couche (S).

9. Siège de véhicule selon la revendication 5, **caractérisé en ce que** des vecteurs de force (F1, F2) d'une force résultante (F_{R}) exercée par une personne assise sur la structure de base du côté du dossier et/ou du côté de la partie d'assise provoquent une déformation auto-réactive de la structure d'armature à joues latérales (120) et une déformation auto-réactive de la structure d'armature de connexion (110) selon la revendication 4, de sorte que la structure d'armature à joues latérales (120) se déplace dans une position de réglage (II), de sorte qu'une structure en cuvette (115) fortement inclinée par rapport à la structure de connexion soit réalisée dans la région des joues latérales.

10. Siège de véhicule selon les revendications 3 et 4, **caractérisé en ce que** des vecteurs de force (F1, F2) d'une force résultante (F_{R}) exercée par une personne assise sur la structure de base du côté du dossier et/ou du côté de la partie d'assise provoquent une déformation auto-réactive de la structure d'armature à joues latérales (120) et une déformation élastique réversible du corps de connexion (110') selon la revendication 3 ou 4, lors de laquelle la structure d'armature à joues latérales (120) se déplace dans une position de réglage (II) de sorte qu'une structure en cuvette (115) fortement inclinée par rapport à la structure de connexion soit réalisée dans la région des joues latérales.

11. Siège de véhicule selon la revendication 1, **caractérisé en ce que** les structures d'armature de l'au moins une structure d'armature à joues latérales (120) présente une forme triangulaire ou une forme rectangulaire, plusieurs structures d'armature de même forme ou de formes différentes pouvant être réunies pour former une structure d'armature multiple.

12. Siège de véhicule selon la revendication 4, **caractérisé en ce que** les structures d'armature de la structure d'armature de connexion (110) présente une forme triangulaire ou rectangulaire, plusieurs structures d'armature de même forme ou de formes différentes pouvant être réunies pour former une structure d'armature multiple.

13. Utilisation d'au moins une structure d'armature construite et fonctionnant selon le principe de Finray, au moins pour réaliser une structure d'armature à joues latérales d'un siège de véhicule, l'au moins une structure d'armature à joues latérales présentant des flancs flexibles élastiques (121, 122) et des traverses (123) pouvant être déviées situées entre les flancs (121, 122), qui sont disposées par le biais de moyens de connexion élastiques (124) au niveau des flancs (121, 122), **caractérisée en ce qu'**une impulsion de force agissant depuis une direction par le biais d'un flanc flexible élastique (121) sur les traverses (123) de l'au moins une structure d'armature provoque une déformation auto-réactive de compensation de l'au moins une structure d'armature au niveau d'un autre endroit dans la direction opposée.
